# EUROPEAN PATENT SPECIFICATION

(11) **EP 4 305 825 B1**
(45) Date of publication and mention of the grant of the patent: **25.02.2026**
(21) Application number: 23781215.1
(22) Date of filing: 16.03.2023
(51) Int. Cl.: H04L 41/5019, H04L 41/16, H04L 45/74, H04W 28/02, H04W 28/24

(54) **METHOD AND DEVICE FOR SUPPORTING FEDERATED LEARNING IN WIRELESS COMMUNICATION SYSTEM**
VERFAHREN UND VORRICHTUNG ZUR UNTERSTÜTZUNG VON FÖDERIERTEM LERNEN IN EINEM DRAHTLOSKOMMUNIKATIONSSYSTEM
PROCÉDÉ ET DISPOSITIF POUR LA PRISE EN CHARGE D'UN APPRENTISSAGE FÉDÉRÉ DANS UN SYSTÈME DE COMMUNICATION SANS FIL

(30) Priority: 28.03.2022 KR 20220037748; 14.11.2022 KR 20220151409
(43) Date of publication of application: 17.01.2024
(73) Proprietor: Samsung Electronics Co., Ltd., Suwon-si, Gyeonggi-do 16677 (KR)
(72) Inventor: SUH, Dongeun, Suwon-si, Gyeonggi-do 16677 (KR); PARK, Jungshin, Suwon-si, Gyeonggi-do 16677 (KR); KIM, Hyesung, Suwon-si, Gyeonggi-do 16677 (KR)
(74) Representative: Gulde & Partner
(86) International application number: PCT/KR2023/003525
(87) International publication number: WO 2023/191359

(56) References cited:
- WO-A2-2020/163760
- US-A1- 2021 120 627
- US-A1- 2021 235 542
- US-A1- 2021 352 180
- NOKIA ET AL: "Fixes for AF session with required QoS update procedure", vol. SA WG2, no. 20211115 - 20211122, 1 December 2021 (2021-12-01), XP052084731, Retrieved from the Internet <URL:https://ftp.3gpp.org/tsg_sa/TSG_SA/TSGS_94E_Electronic_2021_12/Docs/SP-211300.zip 23502_CR3248R1_(Rel-17)_IIoT_S2-2109285-WasS2-2108478-CR 23 502 QoS Procedure-update.docx> [retrieved on 20211201]
- NOKIA ET AL: "NEF PCF interactions", vol. SA WG2, no. e-meeting; 20210517 - 20210528, 10 May 2021 (2021-05-10), XP052004353, Retrieved from the Internet <URL:https://ftp.3gpp.org/tsg_sa/WG2_Arch/TSGS2_145E_Electronic_2021-05/Docs/S2-2104019.zip S2-2104019 was S2-2102947r01 PCR 23.247 NEF PCF interactions.docx> [retrieved on 20210510]
- "3rd Generation Partnership Project; Technical Specification Group Services and System Aspects; Procedures for the 5G System (5GS); Stage 2 (Release 17)", 3GPP STANDARD; 3GPP TS 23.502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V17.4.0, 23 March 2022 (2022-03-23), Mobile Competence Centre ; 650, route des Lucioles ; F-06921 Sophia-Antipolis Cedex ; France, pages 1 - 738, XP052144761
- "3rd Generation Partnership Project; Technical Specification Group Services and System Aspects; Study on enhancement of support for Edge Computing in 5G Core network (5GC) (Release 17)", 3GPP STANDARD; TECHNICAL REPORT; 3GPP TR 23.748, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V17.0.0, 17 December 2020 (2020-12-17), Mobile Competence Centre ; 650, route des Lucioles ; F-06921 Sophia-Antipolis Cedex ; France , pages 1 - 250, XP051975180

## Description

### [Technical Field]

The present disclosure relates to a method and device for supporting federated learning in a wireless communication system.

### [Background Art]

5^{th} generation (5G) mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

NOKIA ET AL: "Fixes for AF session with required QoS update procedure", 3GPP DRAFT; SP-211300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. 20211115 - 20211122 1 December 2021 (2021-12-01) discloses a network exposure function (NEF) receiving a request for the multi member application function (AF) session that comprises a required quality of service (QoS) for a set of UEs.

NOKIA ET AL: "NEF PCF interactions", 3GPP DRAFT; S2-2104019, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. e-meeting; 20210517 - 20210528 10 May 2021 (2021-05-10) teaches a multicast-broadcast services (MBS) session setup process between an AF and a NEF based on an allocate Temporary Mobile Group Identity (TMGI) request message.

Methods and systems for application function (AF) influence of Protocol Data Unit (PDU) sessions on traffic routing for joint user plane path optimization for a group of User Equipment (UE) are known from US 2021/235542 A1.

### [Disclosure of Invention]

### [Technical Problem]

Mobile communication terminal application service providers may utilize a machine learning model for a service. For learning of a machine learning model, application service providers may utilize federated learning (FL). That is, an application running on each terminal learns a local model with collected local data and transmits only the resulting local update (i.e., gradient) to a server, and the server collects local updates from applications to learn a global model and distributes again the global model to the application. Each application participating in FL may have a different learning speed (i.e., the speed of transmitting the learning result to the server) according to network conditions of the terminal driving the application, and an overall learning speed of FL is determined by a member (i.e., application or terminal) having a slowest learning speed. Therefore, for efficient learning, it is important that terminals that may receive allocation of the same network resources participate in FL.

Since the overall learning speed of FL is determined by the slowest learning speed of a member (i.e., application or device), AF may need a list of addresses for specific devices (e.g., a set of device IP addresses) that can be allocated with the same network resources from among the list of addresses for members.

### [Solution to Problem]

A 5G mobile communication operator may provide information on terminals (e.g., a list of UE address) that may receive allocation of the same QoS for FL traffic transmission to an application service provider performing federated learning through an application function (AF).

Technical problems to be solved in the disclosure are not limited to the above-described technical problems, and other technical problems not mentioned may be clearly understood by those of ordinary skill in the art to which the disclosure belongs from the description below.

The invention is defined by the appended claims. The description that follows is subjected to this limitation. Any disclosure lying outside the scope of said claims is only intended for illustrative as well as comparative purposes.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for certain words and phrases are provided throughout this patent document, those of ordinary skill in the art should understand that in many, if not most instances, such definitions apply to prior, as well as future uses of such defined words and phrases.

### [Advantageous Effects of Invention]

In an embodiment of the disclosure, in a 5G system, an AF requests to a PCF through an NEF to generate a QoS flow with the same QoS for a plurality of terminals, and the PCF generates a QoS flow with the same QoS for terminals and transmits again the corresponding terminals and QoS information to the AF. An external application service provider can receive information on terminals that satisfy the requested QoS from the 5G system through the AF and receive network resource allocation that satisfies requested QoS for the terminals.

Effects obtainable in the disclosure are not limited to the above-mentioned effects, and other effects not mentioned may be clearly understood by those of ordinary skill in the art to which the disclosure belongs from the description below.

### [Brief Description of Drawings]

In the drawings, the same or similar reference numerals may be used for the same or similar components.
FIG. 1 illustrates a procedure in which an AF requests QoS flow allocation and terminal selection based on requirements to a PCF through an NEF according to an embodiment of the present disclosure.
FIG. 2 illustrates a procedure in which an AF requests terminal list update in an FL group and QoS requirements to a PCF through an NEF according to an embodiment of the present disclosure.
FIG. 3 illustrates a procedure in which an AF creates/updates/deletes parameters for an FL service to UDM according to an embodiment of the present disclosure.
FIG. 4 illustrates that a PCF recognizes the fact that a terminal corresponding to a PDU session belongs to an FL group through UDM in a PDU session creation or modification procedure, and determines a QoS parameter according to QoS requirements received from the UDM according to an embodiment of the present disclosure.
FIG. 5 illustrates a constitution of a terminal according to an embodiment of the present disclosure.
FIG. 6 illustrates a constitution of a network entity according to an embodiment of the present disclosure.

### [Mode for the Invention]

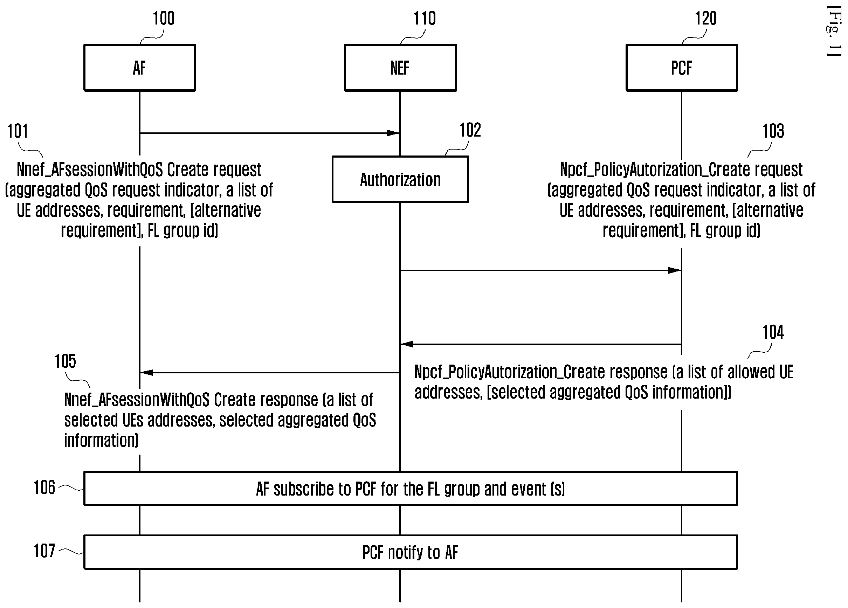

FIGS. 1 through 6, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

Hereinafter, the operating principle of the disclosure will be described in detail with reference to the accompanying drawings. Further, terms to be described later are terms defined in consideration of functions in the disclosure. Because this may vary according to the intention or custom of the user or operator, the definition thereof should be determined according to the contents throughout this specification.

For the same reason, some components are exaggerated, omitted, or schematically illustrated in the accompanying drawings. Further, the size of each component does not fully reflect the actual size. In each drawing, the same reference numerals are given to the same or corresponding components.

Advantages and features of the disclosure, and a method of achieving them will become apparent with reference to the embodiments described below in detail in conjunction with the accompanying drawings. However, the disclosure is not limited to the embodiments disclosed below, but may be implemented in various different forms, and these embodiments enable the disclosure to be complete, and are provided to fully inform the scope of the disclosure to those of ordinary skill in the art to which the disclosure pertains, and the disclosure is only defined by the scope of the claims. Like reference numerals refer to like components throughout the specification.

In this case, it will be understood that each block of flowcharts and combinations of the flowcharts may be performed by computer program instructions. Because these computer program instructions may be mounted in a processor of a general purpose computer, special purpose computer, or other programmable data processing equipment, the instructions performed by a processor of a computer or other programmable data processing equipment generate a means that performs functions described in the flowchart block(s). Because these computer program instructions may be stored in a computer usable or computer readable memory that may direct a computer or other programmable data processing equipment in order to implement a function in a particular manner, the instructions stored in the computer usable or computer readable memory may produce a production article containing instruction means for performing the function described in the flowchart block(s). Because the computer program instructions may be mounted on a computer or other programmable data processing equipment, a series of operational steps are performed on the computer or other programmable data processing equipment to generate a computer-executed process; thus, instructions for performing a computer or other programmable data processing equipment may provide steps for performing functions described in the flowchart block(s).

Further, each block may represent a module, a segment, or a portion of a code including one or more executable instructions for executing specified logical function(s). Further, it should be noted that in some alternative implementations, functions recited in the blocks may occur out of order. For example, two blocks illustrated one after another may in fact be performed substantially simultaneously, or the blocks may be sometimes performed in the reverse order according to the corresponding function.

In this case, the term "-unit" used in this embodiment means software or hardware components such as FPGA or ASIC, and "-unit" performs certain roles. However, "-unit" is not limited to software or hardware. "-unit" may be constituted to reside in an addressable storage medium or may be constituted to reproduce one or more processors. Therefore, as an example, "-unit" includes components such as software components, object-oriented software components, class components, and task components, processes, functions, properties, procedures, subroutines, segments of program code, drivers, firmware, microcode, circuit, data, databases, data structures, tables, arrays, and variables. Functions provided in the components and "-units" may be combined into a smaller number of components and "-units" or may be further separated into additional components and "-units." Further, components and "-units" may be implemented to reproduce one or more CPUs in a device or secure multimedia card.

Specific terms used in the following description are provided to assist understanding of the disclosure, and the use of these specific terms may be changed into other forms without departing from the technical scope of the disclosure.

A term indicating network entities used in the description, a term indicating messages, a term indicating identification information and the like are exemplified for convenience of description.

Hereinafter, for convenience, the disclosure uses terms and names defined in the 5G system standard, but is not limited by the terms and names, and may be equally applied to systems conforming to other standards.

The disclosure provides a method for supporting federated learning in a mobile communication system. In the disclosure, the mobile communication system receives identifier information and quality of service (QoS) requirements of terminals capable of participating in federated learning from an external third party server (application function (AF)), and the mobile communication system selects terminals capable of allocating network resources and allocates sub-network resources (i.e., QoS Flow) based on the requirements, and transmits a result thereof to the AF.

A 5G mobile communication network is composed of a 5G user equipment (UE, terminal), 5G radio access network (RAN, base station, 5G nodeB (gNB), evolved nodeB (eNB), and 5G core network. The 5G core network is composed of an access and mobility management function (AMF) that provides a mobility management function of a UE, a session management function (SMF) that provides a session management function, a user plane function (UPF) that performs a data transmission role, a policy control function (PCF) that provides a policy control function, unified data management (UDM) that provides a data management function such as subscriber data and policy control data, and a network function such as unified data repository (UDR) that stores data of various network functions such as UDM.

In the 3GPP system, a conceptual link connecting NFs in the 5G system is defined as a reference point. The following illustrates reference points included in the 5G system architecture:
- N1: Reference point between UE and AMF;
- N2: Reference point between (R)AN and AMF;
- N3: Reference point between (R)AN and UPF;
- N4: Reference point between SMF and UPF;
- N5: Reference point between PCF and AF;
- N6: Reference point between UPF and DN;
- N7: Reference point between SMF and PCF;
- N8: Reference point between UDM and AMF;
- N9: Reference point between two core UPFs;
- N10: Reference point between UDM and SMF;
- N11: Reference point between AMF and SMF;
- N12: Reference point between AMF and AUSF (authentication server function);
- N13: Reference point between UDM and authentication server function (AUSF);
- N14: Reference point between two AMFs; and
- N15: Reference point between PCF and AMF in case of non-roaming scenario, reference point between PCF and AMF in visited network in case of roaming scenario.

In a 5G system, network slicing refers to a technology and structure that enables virtualized, independent, and multiple logical networks in one physical network. In order to satisfy specialized requirements of a service/application, a network operator constitutes a virtual end-to-end network of a network slice to provide a service. In this case, the network slice is identified by an identifier of single-network slice selection assistance information (S-NSSAI). The network may transmit a slice set (e.g., allowed NSSAI(s)) allowed to a terminal during a terminal registration procedure (e.g., UE registration procedure), and the terminal may transmit and receive application data through a protocol data unit (PDU) session generated through one S-NSSAI (i.e., network slice) of the slice set.

The mobile communication system receives identifier information and quality of service (QoS) requirements of terminals capable of participating in federated learning from an external third party server (application function, AF), and the mobile communication system selects terminals that may allocate network resources and allocates sub-network resources (i.e., QoS Flow) based on the requirements, and transmits a result thereof to the AF. Among the terms used in the description of the disclosure, an aggregated QoS may be used and interpreted in the same meaning as that of a same QoS, identical QoS, and group QoS. For example, an aggregated QoS request indicator and same QoS request indicator, aggregated QoS information and same QoS information, and aggregated QoS notification indicator and same QoS notification indicator may be interpreted and used in the same meaning.

FIG. 1 illustrates a procedure in which an AF requests QoS flow allocation and UE selection based on requirements to a PCF through an NEF according to an embodiment of the present disclosure.

With reference to FIG. 1, in step 101, an AF 100 transmits a request message to an NEF 110. The request message transmitted by the AF 100 to the NEF 110 includes the following information:
(1) an aggregated QoS request indicator, (2) a list of UE addresses, (3) requirement, [alternative requirements], (4) an FL group id, (5) S-NSSAI, DNN, and the like.

In the case that the request message transmitted by the AF 100 includes an aggregated QoS request indicator, the requirement includes a QoS reference (i.e., an identifier representing one of several predefined individual QoS parameters) or an individual QoS parameter. The AF 100 includes the following information in the alternative requirement so that the network may select according to circumstances:
Set composed of (QoS reference or individual QoS parameter, number of minimum selected UEs) pairs.

According to an embodiment, the request message may be an Nnef_AFsessionWithQoS Create request message.

In step 102, when receiving a request message from the AF 100 in step 101, the NEF 110 performs authorization on the request message thereof. In this case, in the case that the number of UEs corresponding to the list of UE addresses in the request message received from the AF 100 or that the number of UEs included in the alternative requirement is greater than a predefined number, steps 103 and 104 may be omitted, and the message transmitted to the AF may include an indicator indicating rejection of the request, a cause value indicating rejection due to exceeding the number of UEs, and the number of allowable UEs in step 105.

In step 103, the NEF 110 may store some or all of information received from the AF 100 in step 101 in a unified data repository (UDR). The NEF 110 may perform PCF discovery of PCFs 120 for a list of UE addresses received from the AF 100 through a binding support function (BSF). The NEF 110 may transmit a list of UE addresses or FL group ids or identifiers of UEs corresponding to the list of UE addresses in a PCF discovery request message to be transmitted to the BSF, and the BSF that has received the message may transmit, to the NEF 110, the PCF 120 and UE addresses of which the PCF 120 is in charge and/or identifier information of UEs. The BSF may store an FL group id, a PCF id, and a list of addresses of UEs for each PCF.

In the case that a plurality of PCFs 120 are found, the NEF 110 may generate a separate identifier (sub FL group id) for a list of addresses of UEs for each PCF and store the separate identifier as data associated with the FL group id in a UDR 140.

In the case that a plurality of PCFs 120 are found, the NEF 110 may transmit a request message to each PCF 120, and in this case, the request message includes only addresses for UEs of which the corresponding PCF 120 is in charge among a list of UE addresses received from the AF 100 in step 101. The NEF 110 may include a UE id corresponding to a UE address for each UE in a message to transmit to the PCF 120.

In step 103, the NEF 110 may transmit information included in the message received from the AF 100 in step 101 to the PCF 120 in addition to the above information.

For example, in step 103, the NEF 110 may transmit a request message corresponding to each UE to the corresponding PCF. For example, in step 103, the NEF 110 may transmit a request message for UEs corresponding to each PCF to the corresponding PCF.

In the case that only a list of UE addresses and an FL group id exist in the message received from the AF 100 in step 101, the NEF 110 may not transmit the message to the PCF 120 and transmit, to the AF 100, a response message that the FL group has been created in step 105.

According to the embodiment, the message transmitted by the NEF 110 to the PCF 120 may be an Npcf_PolicyAuthorization_Create request message.

In step 104, in the case that an aggregated QoS request indicator is included in the message received in step 103, the PCF 120 may identify whether QoS corresponding to requirements of the message received in step 103 is allowed for all UEs corresponding to a list of UE addresses included in the corresponding message. For all UEs allowed to provide a QoS, the PCF 120 may determine QoS related parameters corresponding to the requirements and request to generate a QoS flow corresponding to the QoS related parameters to a session management function (SMF). In the case that alternative requirements are included in the message received in step 103, the PCF 120 may dynamically select QoS related parameters and UEs that satisfy the alternative requirements according to network conditions. When a new QoS parameter or UEs are selected, the PCF 120 may notify the AF 100 of this through the NEF 110.

The PCF 120 includes the following information in a response message transmitting to the NEF 110: whether a requested QoS is allowed for each UE corresponding to a list of UE ids or a list of UE addresses in which a QoS is allowed; allowed QoS information (i.e., selected aggregated QoS information), the number of allowed UEs, the number of rejected UEs, and the like.

According to an embodiment, a response message transmitted by the PCF 120 to the NEF 110 is an Npcf_PolicyAuthorization_Create response message.

In step 105, the NEF 110 transmits information received from the PCF 120 to the AF 100. In the case of receiving responses from a plurality of PCFs 120, the NEF 110 includes a list of addresses of UEs for each PCF identified in step 103 and corresponding identifier information in a message transmitting to the corresponding AF 100. The AF 100 identifies information on selected UEs for each PCF 120 and selected aggregated QoS information based on this.

According to an embodiment, a response message transmitted by the NEF 110 to the AF 100 is an Nnef_ AFsessionWithQoS Create response message.

In step 106, the AF 100 may transmit a subscription request message including an FL group id and an event id to the NEF 110 to request a notification when specific events identified by the event id occur in the PCFs 120 corresponding to the FL group id.

In step 107, when a corresponding event occurs, the PCF 120 may include a PCF group id in the notifying message and transmit the notifying message to the AF 100 through the NEF 110.

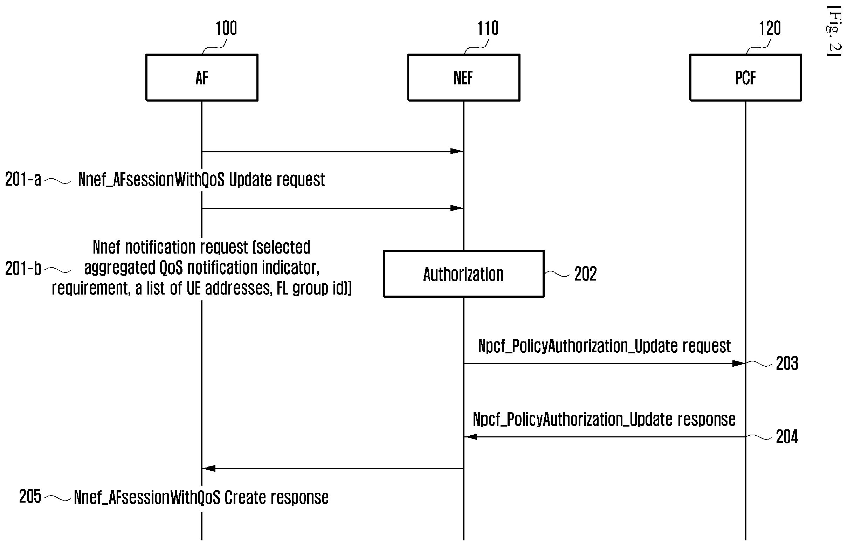

FIG. 2 illustrates a procedure in which the AF 100 requests UE list update in an FL group and QoS requirements to the PCF 120 through the NEF 110 according to an embodiment of the present disclosure.

With reference to FIG. 2, in step 201-a, when a requirement or a list of UE addresses is updated, the AF 100 may transmit a request message to the NEF 110. The request message transmitted by the AF 100 to the NEF 110 may include the following information:
(1) an aggregated QoS request indicator, (2) a list of UE addresses, (30 requirement, [alternative requirements], (4) an FL group id, (5) S-NSSAI, DNN, and the like.

In the case that the request message transmitted by the AF 100 includes an aggregated QoS request indicator, the requirement may include a QoS reference (i.e., an identifier representing one of several predefined individual QoS parameters) or an individual QoS parameter. The AF 100 may include the following information in alternative requirements so that the network may select according to circumstances:
a set composed of (QoS reference or individual QoS parameter, the number of minimum selected UEs) pairs.

According to an embodiment, the request message may be an Nnef_AFsessionWithQoS update request message.

In step 201-b, in the case that the AF 100 updates aggregated QoS information selected by the other PCF 120 for the FL group id (in the case that a new QoS is selected due to an alternative requirement), the AF 100 may request QoS update to the corresponding PCF 120 through the NEF 110. The request message includes the following information:
(1) selected aggregated QoS notification indicator, (2) requirement, (3) a list of UE addresses, (4) an FL group id, (5) a sub FL group id, and the like.

According to an embodiment, the message may be an Nnef notification request message.

In step 202, when the NEF 110 receives the request message from the AF 100 in step 201, the NEF 110 performs authorization on the request message thereof. In this case, in the case that the number of UEs corresponding to the list of UE addresses in the request message received from the AF 100 or that the number of UEs included in the alternative requirement is greater than a predefined number, steps 203 and 204 may be omitted, and a message transmitted to the AF 100 may include an indicator indicating rejection of the request, a cause value indicating rejection due to exceeding the number of UEs, and the number of allowable UEs in step 205.

In step 203, the NEF 110 may store some or all of information received from the AF 100 in step 201 in the UDR 140. The NEF 110 may perform PCF discovery of PCFs 120 for a list of UE addresses received from the AF 100 through a binding support function (BSF). The NEF 110 may transmit a list of UE addresses or FL group ids or UE identifiers corresponding to the list of UE addresses in the PCF discovery request message to be transmitted to the BSF, and the BSF that has received the message may transmit, to the NEF 110, the PCF 120 and UE identifier information and/or UE addresses of which the PCF 120 is in charge. In the case that a plurality of PCFs 120 are found, the NEF 110 transmits a request message to each PCF 120, and in this case, the request message includes only addresses of UEs of which the corresponding PCF 120 is in charge among a list of UE addresses received from the AF 100 in step 201. The NEF 110 may include a UE id corresponding to a UE address for each UE in a message to be transmitted to the PCF 120.

For example, the binding support function (BSF) may perform PCF discovery for a plurality of PCFs 120 for a list of UE addresses received from the NEF 110. For example, the BSF may transmit a PCF discovery message for a plurality of PCFs 120 for a list of UE addresses received from the NEF 110.

The NEF 110 may transmit information included in the message received from the AF 100 in step 201 to the PCF 120 in addition to the above information.

For example, in step 203, the NEF 110 may transmit a request message corresponding to each UE to the corresponding PCF. For example, in step 203, the NEF 110 may transmit a request message for UEs corresponding to each PCF to the corresponding PCF.

In the case that only a list of UE addresses and an FL group id exist in the message received from the AF 100 in step 201, the NEF 110 may not transmit the message to the PCF 120, but transmit, to the AF 100, a response message that an FL group has been created in step 205.

According to an embodiment, a message transmitted by the NEF 110 to the PCF 120 may be an Npcf_PolicyAuthorization_Update request message.

In step 204, in the case that the aggregated QoS request indicator is included in the message received in step 203, the PCF 120 may identify whether a QoS corresponding to the requirements of the message received in step 203 is allowed for all UEs corresponding to a list of UE addresses included in the corresponding message. For all UEs allowed to provide a QoS, the PCF 120 may determine QoS related parameters corresponding to the requirements and request to generate a QoS flow corresponding to the QoS related parameters to the session management function (SMF). In the case that the message received in step 203 includes alternative requirements, the PCF 120 may select QoS related parameters and UEs that satisfy the alternative requirements.

The PCF 120 may include the following information in the response message to be transmitted to the NEF 110: whether the requested QoS is allowed for each UE corresponding to a list of UE ids or a list of UE addresses in which a QoS is allowed; allowed QoS information, the number of allowed UEs, the number of rejected UEs, and the like.

According to an embodiment, a message transmitted by the NEF 110 to the PCF 120 may be an Npcf_PolicyAuthorization_Update response message.

In step 205, the NEF 110 may transmit information received from the PCF 120 to the AF 100.

According to the embodiment, a message transmitted by the NEF 110 to the AF 100 may be an Nnef_ AFsessionWithQoS update/create response message.

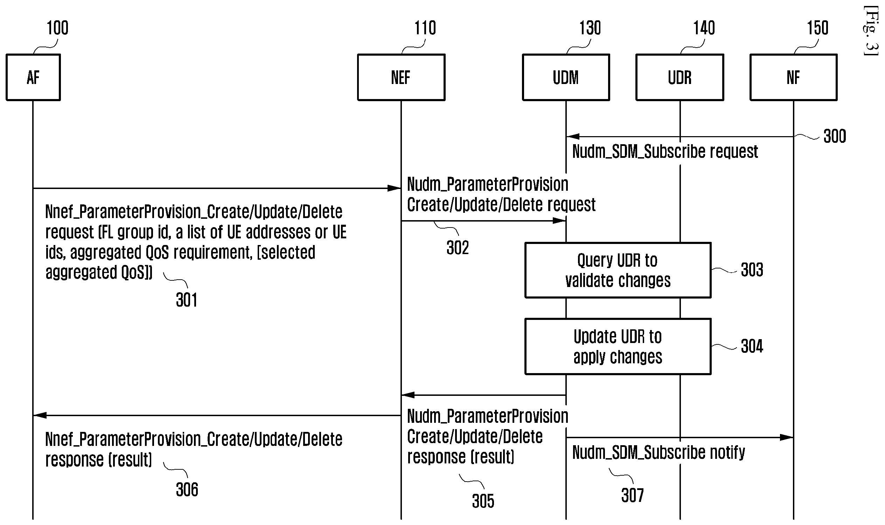

FIG. 3 illustrates a procedure in which the AF 100 creates/updates/deletes parameters for an FL service to a UDM 130 according to an embodiment of the present disclosure.

With reference to FIG. 3, according to an embodiment, in step 300, a network function (NF) 150 may transmit a subscription request message to the UDM 130. In this case, a message transmitted by the NF may be an Nudm_SDM_subscribe request message.

In step 301, the AF 100 may transmit the following parameters related to the FL service to the NEF 110 to request parameter creation/update/deletion:
(1) an aggregated QoS request indicator, (2) a list of UE addresses or UE ids, requirement, [alternative requirements], (3) an FL group id, (4) S-NSSAI, (5) DNN, [selected aggregated QoS information], and the like.

In the case that the request message transmitted by the AF 100 includes an aggregated QoS request indicator, the requirement may include a QoS reference (i.e., an identifier representing one of several predefined individual QoS parameters) or an individual QoS parameter. The AF 100 may include the following information in alternative requirements so that the network may select according to circumstances:
a set composed of (QoS reference or individual QoS parameter, the number of minimum selected UEs) pairs.

According to the embodiment, a message transmitted by the AF 100 to the NEF 110 may be an Nnef_ParameterProvision _Create/Update/Delete request message.

In step 302, the NEF 110 may perform authorization on the request from the AF 100, and then transmit information included in the message received from the AF 100 to the UDM 130.

According to the embodiment, a message transmitted to the UDM 130 may be an Nudm _ParameterProvision_Create/Update/Delete request message, and the message may include the message received from the AF 100 or information included in the message received from the AF 100.

In step 303, in order to verify the change request of the information received in step 302, the UDM 130 may receive subscription information from the UDR 140. In this case, the UDM 130 may receive subscription information from the UDR 140 based on the UE id.

In step 304, if the verification is successful in step 303, the UDM 130 may store information received from the AF 100 in the UDR 140 using the following as a data key:
(1) an FL group id, (2) a sub FL group id, and the like.

In step 305, the UDM 130 may transmit the request result to the NEF 110. According to the embodiment, a message transmitted by the UDM 130 to the NEF 110 may be an Nudm_ParameterProvision_Create/Update/Delete response message.

In step 306, the NEF 110 may transmit the result received in step 305 to the AF 100. According to the embodiment, a message transmitted by the NEF 110 to the AF 100 may be an Nnef_ParameterProvision _Create/Update/Delete response message, and a resulting value may be included in the message.

In step 307, when an NF (e.g., the PCF 120) corresponding to the changed information exists in step 304, the UDM 130 may notify the NF of updated information. For example, in the case that information on UEs included in the FL group id is changed, the UDM 130 may notify the PCF 120 of this or in the case that QoS requirements corresponding to the FL group id are changed, the UDM 130 may notify the PCF 120 of this.

According to the embodiment, a message transmitted by the UDM 130 to the NF may be an Nudm_SDM_subscribe response message.

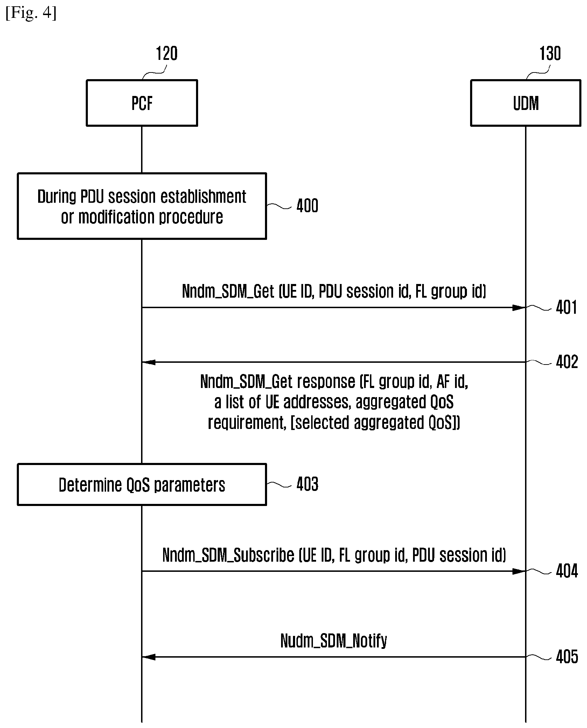

FIG. 4 illustrates that the PCF 120 recognizes the fact that a UE corresponding to a PDU session belongs to an FL group through the UDM 130 in a PDU session creation or modification procedure, and determines a QoS parameter according to QoS requirements received from the UDM 130 according to an embodiment of the present disclosure.

With reference to FIG. 4, in step 0, the PCF 120 may be in a PDU session creation or modification procedure.

In step 401, in the PDU session creation or modification procedure, the PCF 120 may request subscriber information of the UE to the UDM 130. In this case, the request message may include the following information:
(1) a UE id, (2) a PDU session id, (3) an FL group id, and the like.

The FL group id may be included in the PDU session modification procedure after the PCF 120 has already received the FL group id from the UDM 130.

According to embodiments, a message transmitted by the PCF 120 to the UDM 130 may be an Nudm_SDM_Get message.

In step 402, the UDM 130 may receive information on a corresponding UE or PDU session from the UDR 140 based on information received from the PCF 120. Upon recognizing the fact that the corresponding UE or the UE having the corresponding PDU session belongs to the FL group, the UDM 130 may include the following information in a response message to be transmitted to the PCF 120:
(1) an aggregated QoS request indicator, (2) a list of UE addresses or UE ids, (3) requirement, [alternative requirements], (4) an FL group id, (5) S-NSSAI, (6) DNN, [selected aggregated QoS information], and the like.

In the case that an aggregated QoS request indicator is included in the received message, the PCF 120 may identify whether a QoS corresponding to the requirements of the received message is allowed for all UEs corresponding to a list of UE addresses included in the message. For all UEs allowed to provide a QoS, the PCF 120 may determine QoS related parameters corresponding to the requirements and request to generate a QoS flow corresponding to the QoS related parameters to the SMF. In the case that an alternative requirement is included in the received message, the PCF 120 may select QoS related parameters and UEs that satisfy the alternative requirement. The PCF 120 may notify the UDM 130 of the determined QoS parameter information and selected UE information.

According to an embodiment, a message received by the PCF 120 from the UDM 130 may be an Nudm_SDM_Get response message.

In step 403, in the case that a FL group id is included in the message received from the UDM 130, the PCF 120 may request a subscription to the UDM 130 including the following information:
(1) a UE id, (2) an FL group id, (3) a PDU session id, and the like.

According to an embodiment, a message transmitted by the PCF 120 to the UDM 130 may be an Nudm_SDM_subscribe message.

In step 404, upon recognizing that data for the FL group id has been changed, the UDM 130 may notify the subscribing PCF 120(s) of this. According to an embodiment, a message transmitted by the UDM 130 to the PCF 120 may be an Nudm_SDM _Notify message.

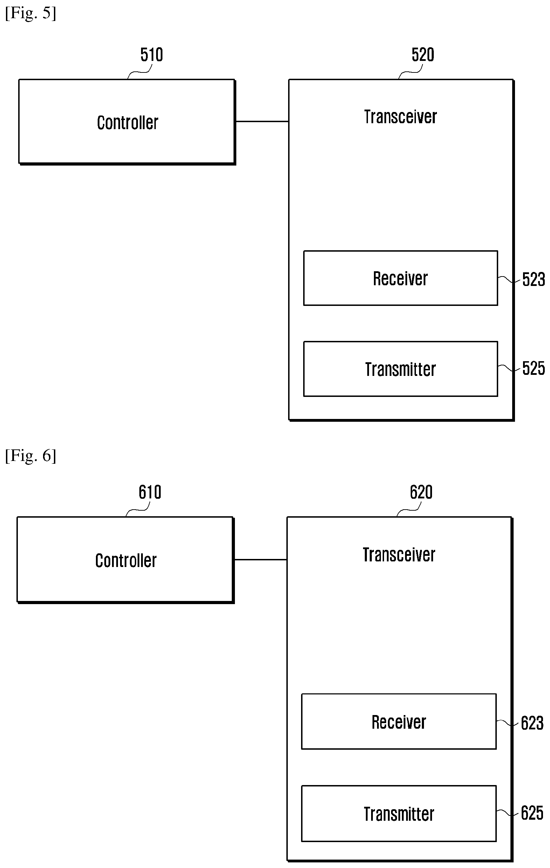

FIG. 5 illustrates a constitution of a UE according to an embodiment of the present disclosure.

With reference to FIG. 5, the UE according to an embodiment of the disclosure may include a transceiver 520 and a controller 510 that controls overall operations thereof. The transceiver 520 may include a transmitter 525 and a receiver 523.

The transceiver 520 may transmit and receive signals to and from other network entities.

The controller 510 may control the UE to perform any one operation of the above-described embodiments. The controller 510 and the transceiver 520 do not necessarily have to be implemented into separate modules, but may be implemented into a single component in the form of a single chip. The controller 510 and the transceiver 520 may be electrically connected. For example, the controller 510 may be a circuit, an application-specific circuit, or at least one processor. Further, operations of the UE may be realized by including a memory device storing a corresponding program code in an arbitrary component in the UE.

FIG. 6 illustrates a constitution of a network entity according to an embodiment of the disclosure.

With reference to FIG. 6, the network entity according to an embodiment of the disclosure may include a transceiver 620 and a controller 610 that controls overall operations thereof. The transceiver 620 may include a transmitter 625 and a receiver 623.

The transceiver 620 may transmit and receive signals to and from other network entities.

The controller 610 may control the network entity to perform any one operation of the above-described embodiments. The controller 610 and the transceiver 620 do not necessarily have to be implemented into separate modules, but may be implemented into a single component in the form of a single chip. The controller 610 and the transceiver 620 may be electrically connected. For example, the controller 610 may be a circuit, an application-specific circuit, or at least one processor. Further, operations of the network entity may be realized by including a memory device storing a corresponding program code in an arbitrary component in the network entity.

The network entity may mean any one of a base station, SMF, UPF, PCF 120, AF 100, NEF 110, UDM 130, UDR 140, NF 150, AUSF, and the like.

It should be noted that the constitution diagrams illustrated in FIGS. 1 to 6, exemplary diagrams of control/data signal transmission methods, exemplary operating procedure diagrams, and constitution diagrams are not intended to limit the scope of the disclosure as defined by the appended claims. That is, all components, entities, or operation steps described with reference to FIGS. 1 to 6 should not be interpreted as being essential components for the implementation of the disclosure, and the inclusion of only some components may be implemented within a range that does not depart from the essence of the disclosure.

Operations of the network entity or the UE described above may be realized by providing a memory device storing the corresponding program code in an arbitrary component in the network entity or the UE device. That is, a controller of the network entity or the UE device may execute the above-described operations by reading and executing a program code stored in the memory device by a processor or a central processing unit (CPU).

Various components and modules of the network entity, base station, or UE device described in this specification may be operated using a hardware circuit such as a combination of a complementary metal oxide semiconductor-based logic circuit, firmware, software, and/or hardware and firmware and/or software inserted into a machine readable medium. For example, various electrical structures and methods may be implemented using electrical circuits such as transistors, logic gates, and application specific integrated circuits.

In the detailed description of the disclosure, although specific embodiments have been described, various modifications are possible without departing from the scope of the disclosure defined by the appended claims.

Although the present disclosure has been described with various embodiments, various changes and modifications may be suggested to one skilled in the art. It is intended that the present disclosure encompass such changes and modifications as fall within the scope of the appended claims.

## Claims

1. A method performed by a network exposure function, NEF, (110) in wireless communication system, the method comprising:
receiving, from an application function, AF, (100) a first request including a list of user equipment, UE, addresses, quality of service, QoS, reference or individual QoS parameters for the list of UE addresses, and alternative service requirements; and
transmitting, to the AF (100), a first response message including a result for the list of UE addresses,
wherein the result for the list of UE addresses includes information indicating whether the first request is granted or not for each UE address in the list of UE addresses.

2. The method of claim 1, further comprising:
transmitting, to a policy control function, PCF, (120) a second request including a UE address included in the list of UE addresses, the QoS reference or the individual QoS parameters, and the alternative service requirements; and
receiving, from the PCF (120), a second response message including a result of the second request.

3. The method of claim 1, further comprising:
performing an authorization for the first request;
transmitting, to a binding support function, BSF, a policy control function, PCF, discovery request associated with a UE address included in the list of UE addresses; and
receiving, from the BSF, a PCF discovery response message in response to the PCF discovery request, and
wherein the transmitting the first response message comprises:
in case that the authorization for the first request is not granted, transmitting, to the AF (100), the first response message including the result indicating that the first request is rejected.

4. The method of claim 1, wherein the alternative service requirements includes one or more QoS references or individual QoS parameters.

5. A method performed by an application function, AF (100), in a wireless communication system, the method comprising:
transmitting, to a network exposure function, NEF, (110) a first request including a list of user equipment, UE, addresses, quality of service, QoS, reference or individual QoS parameters for the list of UE addresses, and alternative service requirements; and
receiving, from the NEF (110), a first response message including a result for the list of UE addresses,
wherein the result for the list of UE addresses includes information indicating whether the first request is granted or not for each UE address in the list of UE addresses.

6. The method of claim 5, wherein the alternative service requirements includes one or more QoS references or individual QoS parameters.

7. The method of claim 5, wherein the first response message further comprises at least one of a number of UEs in which the QoS is allowed from the list of UE addresses, a number of UEs in which the QoS is rejected from the list of UE addresses, or addresses of UEs in which the QoS is allowed from the list of UE addresses, and
wherein, the first response message further comprises a result for the list of UE addresses associated with the alternative service requirements.

8. The method of claim 5, wherein, in case that an authorization for the first request is not granted, the first response message includes the result indicating that the first request is rejected .

9. A network exposure function, NEF, (110) in a wireless communication system, the NEF (110) comprising:
a transceiver (520, 620); and
a controller (510, 610) configured to:
receive, from an application function, AF, (100) via the transceiver (520, 620), a first request including a list of user equipment, UE, addresses, quality of service, QoS, reference or individual QoS parameters for the list of UE addresses, and alternative service requirements; and
transmit, to the AF (100) via the transceiver (520, 620), a first response message including a result for the list of UE addresses,
wherein the result for the list of UE addresses includes information indicating whether the first request is granted or not for each UE address in the list of UE addresses.

10. The NEF (110) of claim 9, wherein the controller (510, 610) is further configured to:
transmit, to a policy control function, PCF, (120) via the transceiver (520, 620), a second request including a UE address included in the list of UE addresses, the QoS reference or the individual QoS parameters, and the alternative service requirements; and
receive, from the PCF (120) via the transceiver (520, 620), a second response message including a result of the second request.

11. The NEF (110) of claim 9, wherein the controller (510, 610) is further configured to:
perform an authorization for the first request;
transmit, to a binding support function, BSF, via the transceiver (520, 620), a policy control function, PCF, discovery request associated with a UE address included in the list of UE addresses; and
receive, from the BSF via the transceiver (520, 620), a PCF discovery response message in response to the PCF discovery request, and
wherein the controller (510, 610) is further configured to:
in case that the authorization for the first request is not granted, transmit, to the AF (100) via the transceiver (520, 620), the first response message including the result indicating that the first request is rejected.

12. The NEF (110) of claim 9, wherein the alternative service requirements includes one or more QoS references or individual QoS parameters.

13. An application function, AF, (100) in a wireless communication system, the AF (100) comprising:
a transceiver (520, 620); and
a controller (510, 610) configured to:
transmit, to a network exposure function, NEF, (110) via the transceiver (520, 620), a first request including a list of user equipment, UE, addresses, quality of service, QoS, reference or individual QoS parameters for the list of UE addresses, and alternative service requirements; and
receive, from the NEF (110) via the transceiver (520, 620), a first response message including a result for the list of UE addresses,
wherein the result for the list of UE address includes information indicating whether the first request is granted or not for each UE address in the list of UE addresses.

14. The AF (100) of claim 13, wherein the alternative service requirements includes one or more QoS references or individual QoS parameters.

15. The AF (100) of claim 13, wherein the first response message further comprises at least one of a number of UEs in which the QoS is allowed from the list of UE addresses, a number of UEs in which the QoS is rejected from the list of UE addresses, or addresses of UEs in which the QoS is allowed from the list of UE addresses,
wherein the first response message further comprises a result for the list of UE addresses associated with the alternative service requirements, and
wherein, in case that an authorization for the first request is not granted, the first response message includes the result indicating that the first request is rejected.

## Patentansprüche

1. Verfahren, das von einer Netzwerkexpositionsfunktion, NEF, (110) in einem drahtlosen Kommunikationssystem durchgeführt wird, wobei das Verfahren Folgendes umfasst:
Empfangen, von einer Anwendungsfunktion, AF, (100) einer ersten Anforderung, die eine Liste von Benutzergeräte-, UE, -Adressen, eine Dienstgüte-, QoS, -Referenz oder individuelle QoS-Parameter für die Liste von UE-Adressen und alternative Diensterfordernisse beinhaltet; und
Übertragen, an die AF (100), einer ersten Antwortnachricht, die ein Ergebnis für die Liste von UE-Adressen beinhaltet,
wobei das Ergebnis für die Liste von UE-Adressen Informationen beinhaltet, die angeben, ob die erste Anforderung für jede UE-Adresse in der Liste von UE-Adressen gewährt wird oder nicht.

2. Verfahren nach Anspruch 1, ferner umfassend:
Übertragen, an eine Richtliniensteuerfunktion, PCF (120), einer zweiten Anforderung, die eine in der Liste von UE-Adressen enthaltene UE-Adresse, die QoS-Referenz oder die individuellen QoS-Parameter und die alternativen Diensterfordernisse beinhaltet; und
Empfangen, von der PCF (120), einer zweiten Antwortnachricht, die ein Ergebnis der zweiten Anforderung beinhaltet.

3. Verfahren nach Anspruch 1, ferner umfassend:
Durchführen einer Autorisierung für die erste Anforderung;
Übertragen, an eine Bindungsunterstützungsfunktion (BSF), einer Richtliniensteuerfunktions-, PCF, -Entdeckungsanforderung, die mit einer in der Liste von UE-Adressen enthaltenen UE-Adresse assoziiert ist; und
Empfangen, von der BSF, einer PCF-Entdeckungsantwortnachricht als Reaktion auf die PCF-Entdeckungsanforderung, und
wobei das Übertragen der ersten Antwortnachricht Folgendes umfasst:
falls die Autorisierung für die erste Anforderung nicht gewährt wird, Übertragen, an die AF (100), der ersten Antwortnachricht, die das Ergebnis beinhaltet, das angibt, dass die erste Anforderung abgelehnt wird.

4. Verfahren nach Anspruch 1, wobei die alternativen Diensterfordernisse eine(n) oder mehrere QoS-Referenzen oder individuelle QoS-Parameter beinhalten.

5. Verfahren, das von einer Anwendungsfunktion, AF (100), in einem drahtlosen Kommunikationssystem durchgeführt wird, wobei das Verfahren Folgendes umfasst:
Übertragen, an eine Netzwerkexpositionsfunktion, NEF (110), einer ersten Anforderung, die eine Liste von Benutzergeräte-, UE, -Adressen, eine Dienstgüte-, QoS, -Referenz oder individuelle QoS-Parameter für die Liste von UE-Adressen und alternative Diensterfordernisse beinhaltet; und
Empfangen, von der NEF (110), einer ersten Antwortnachricht, die ein Ergebnis für die Liste von UE-Adressen beinhaltet,
wobei das Ergebnis für die Liste von UE-Adressen Informationen beinhaltet, die angeben, ob die erste Anforderung für jede UE-Adresse in der Liste von UE-Adressen gewährt wird oder nicht.

6. Verfahren nach Anspruch 5, wobei die alternativen Diensterfordernisse eine(n) oder mehrere QoS-Referenzen oder individuelle QoS-Parameter beinhalten.

7. Verfahren nach Anspruch 5, wobei die erste Antwortnachricht ferner mindestens eines von einer Anzahl von UEs, für die die QoS erlaubt ist, aus der Liste von UE-Adressen, einer Anzahl von UEs, für die die QoS abgelehnt ist, aus der Liste von UE-Adressen oder Adressen von UEs, für die die QoS erlaubt ist, aus der Liste von UE-Adressen umfasst, und
wobei die erste Antwortnachricht ferner ein Ergebnis für die Liste von UE-Adressen umfasst, das mit den alternativen Diensterfordernissen assoziiert ist.

8. Verfahren nach Anspruch 5, wobei, falls eine Autorisierung für die erste Anforderung nicht gewährt wird, die erste Antwortnachricht das Ergebnis beinhaltet, das angibt, dass die erste Anforderung abgelehnt wird.

9. Netzwerkexpositionsfunktion, NEF, (110) in einem drahtlosen Kommunikationssystem, wobei die NEF (110) Folgendes umfasst:
einen Transceiver (520, 620); und
eine Steuerung (510; 610), die konfiguriert ist zum:
Empfangen, von einer Anwendungsfunktion, AF, (100) über den Transceiver (520, 620), einer ersten Anforderung, die eine Liste von Benutzergeräte-, UE, -Adressen, eine Dienstgüte-, QoS, -Referenz oder individuelle QoS-Parameter für die Liste von UE-Adressen und alternative Diensterfordernisse beinhaltet; und
Übertragen, an die AF (100) über den Transceiver (520, 620), einer ersten Antwortnachricht, die ein Ergebnis für die Liste von UE-Adressen beinhaltet,
wobei das Ergebnis für die Liste von UE-Adressen Informationen beinhaltet, die angeben, ob die erste Anforderung für jede UE-Adresse in der Liste von UE-Adressen gewährt wird oder nicht.

10. NEF (110) nach Anspruch 9, wobei die Steuerung (510, 610) ferner konfiguriert ist zum:
Übertragen, an eine Richtliniensteuerfunktion, PCF, (120) über den Transceiver (520, 620), einer zweiten Anforderung, die eine in der Liste von UE-Adressen enthaltene UE-Adresse, die QoS-Referenz oder die individuellen QoS-Parameter und die alternativen Diensterfordernisse beinhaltet; und
Empfangen, von der PCF (120) über den Transceiver (520, 620), einer zweiten Antwortnachricht, die ein Ergebnis der zweiten Anforderung beinhaltet.

11. NEF (110) nach Anspruch 9, wobei die Steuerung (510, 610) ferner konfiguriert ist zum:
Durchführen einer Autorisierung für die erste Anforderung;
Übertragen, an eine Bindungsunterstützungsfunktion (BSF) über den Transceiver (520, 620), einer Richtliniensteuerfunktions-, PCF, -Entdeckungsanforderung, die mit einer in der Liste von UE-Adressen enthaltenen UE-Adresse assoziiert ist; und
Empfangen, von der BSF über den Transceiver (520, 620), einer PCF-Entdeckungsantwortnachricht als Reaktion auf die PCF-Entdeckungsanforderung, und
wobei die Steuerung (510, 610) ferner konfiguriert ist zum:
falls die Autorisierung für die erste Anforderung nicht gewährt wird, Übertragen, an die AF (100) über den Transceiver (520, 620), der ersten Antwortnachricht, die das Ergebnis beinhaltet, das angibt, dass die erste Anforderung abgelehnt wird.

12. NEF (110) nach Anspruch 9, wobei die alternativen Diensterfordernisse eine(n) oder mehrere QoS-Referenzen oder individuelle QoS-Parameter beinhalten.

13. Anwendungsfunktion, AF, (100) in einem drahtlosen Kommunikationssystem, wobei die AF (100) Folgendes umfasst:
einen Transceiver (520, 620); und
eine Steuerung (510; 610), die konfiguriert ist zum:
Übertragen, an eine Netzwerkexpositionsfunktion, NEF, (110) über den Transceiver (520, 620), einer ersten Anforderung, die eine Liste von Benutzergeräte-, UE, -Adressen, eine Dienstgüte-, QoS, -Referenz oder individuelle QoS-Parameter für die Liste von UE-Adressen und alternative Diensterfordernisse beinhaltet; und
Empfangen, von der NEF (110) über den Transceiver (520, 620), einer ersten Antwortnachricht, die ein Ergebnis für die Liste von UE-Adressen beinhaltet,
wobei das Ergebnis für die Liste von UE-Adressen Informationen beinhaltet, die angeben, ob die erste Anforderung für jede UE-Adresse in der Liste von UE-Adressen gewährt wird oder nicht.

14. AF (100) nach Anspruch 13, wobei die alternativen Diensterfordernisse eine(n) oder mehrere QoS-Referenzen oder individuelle QoS-Parameter beinhalten.

15. AF (100) nach Anspruch 13, wobei die erste Antwortnachricht ferner mindestens eines von einer Anzahl von UEs, für die die QoS erlaubt ist, aus der Liste von UE-Adressen, einer Anzahl von UEs, für die die QoS abgelehnt ist, aus der Liste von UE-Adressen oder Adressen von UEs, für die die QoS erlaubt ist, aus der Liste von UE-Adressen umfasst,
wobei die erste Antwortnachricht ferner ein Ergebnis für die Liste von UE-Adressen umfasst, das mit den alternativen Diensterfordernissen assoziiert ist, und
wobei, falls eine Autorisierung für die erste Anforderung nicht gewährt wird, die erste Antwortnachricht das Ergebnis beinhaltet, das angibt, dass die erste Anforderung abgelehnt wird.

## Revendications

1. Procédé exécuté par une fonction d'exposition de réseau, NEF, (110) dans un système de communication sans fil, le procédé comprenant :
recevoir, depuis une fonction d'application, AF, (100) une première demande comprenant une liste d'adresses d'équipements utilisateurs, UE, des paramètres de qualité de service, QoS, de référence ou de QoS individuels pour la liste d'adresses d'UE, et d'exigences de service alternatives ; et
transmettre, à l'AF (100), un premier message de réponse comprenant un résultat pour la liste d'adresses d'UE,
dans lequel le résultat pour la liste d'adresses d'UE comprend des informations indiquant si la première demande est autorisée ou non pour chaque adresse d'UE dans la liste d'adresses d'UE.

2. Procédé de la revendication 1, comprenant en outre :
transmettre à une fonction de commande de politique, PCF, (120) une deuxième demande comprenant une adresse d'UE incluse dans la liste d'adresses d'UE, de paramètres de QoS de référence ou de QoS individuels et d'exigences de service alternatives ; et
recevoir, depuis la PCF (120), un deuxième message de réponse comprenant un résultat de la deuxième demande.

3. Procédé de la revendication 1, comprenant en outre :
exécuter une autorisation pour la première demande ;
transmettre, à une fonction de support de liaison, BSF, une demande de découverte de fonction de commande de politique, PCF, associée à une adresse d'UE incluse dans la liste d'adresses d'UE; et
recevoir, depuis le BSF, un message de réponse de découverte PCF en réponse à la demande de découverte PCF, et
dans lequel la transmission du premier message de réponse comprend :
dans le cas où l'autorisation pour la première demande n'est pas accordée, transmettre, à l'AF (100), le premier message de réponse comprenant le résultat indiquant que la première demande est rejetée.

4. Procédé de la revendication 1, dans lequel les exigences de service alternatives comprennent un ou plusieurs paramètres de QoS de référence ou de QoS individuels.

5. Procédé exécuté par une fonction d'application, AF (100), dans un système de communication sans fil, le procédé comprenant :
transmettre, à une fonction d'application, NEF, (110), une première demande comprenant une liste d'adresses d'équipements utilisateurs, UE, de paramètres de qualité de service, QoS, de référence ou de QoS individuels pour la liste d'adresses d'UE, et d'exigences de service alternatives ; et
recevoir, depuis la NEF (110), un premier message de réponse comprenant un résultat pour la liste des adresses d'UE,
dans lequel le résultat pour la liste d'adresses d'UE comprend des informations indiquant si la première demande est autorisée ou non pour chaque adresse d'UE dans la liste d'adresses d'UE.

6. Procédé de la revendication 5, dans lequel les exigences de service alternatives comprennent un ou plusieurs paramètres de QoS de référence ou de QoS individuels.

7. Procédé de la revendication 5, dans lequel le premier message de réponse comprend en outre au moins l'un d'un nombre d'UE dans lesquels la QoS est autorisée à partir de la liste d'adresses d'UE, d'un nombre d'UE dans lesquels la QoS est rejetée à partir de la liste d'adresses d'UE, ou d'adresses d'UE dans lesquelles la QoS est autorisée à partir de la liste d'adresses d'UE,
dans lequel le premier message de réponse comprend en outre un résultat pour la liste d'adresses d'UE associées aux exigences de service alternatives.

8. Procédé de la revendication 5, dans lequel, dans le cas où une autorisation pour la première demande n'est pas accordée, le premier message de réponse comprend le résultat indiquant que la première demande est rejetée.

9. Fonction d'exposition de réseau, NEF,(110) dans un système de communication sans fil, la NEF (110) comprenant :
un émetteur-récepteur (520, 620) ; et
une commande (510, 610) configurée pour :
recevoir, depuis une fonction d'application, AF, (100) via l'émetteur-récepteur (520, 620), une première demande comprenant une liste d'adresses d'équipement utilisateur, UE, des paramètres de qualité de service, QoS, de référence ou de QoS individuels pour la liste d'adresses d'UE, et d'exigences de service alternatives ; et
transmettre, à l'AF (100) via l'émetteur-récepteur (520, 620), un premier message de réponse comprenant un résultat pour la liste d'adresses d'UE,
dans laquelle le résultat pour la liste d'adresses d'UE comprend des informations indiquant si la première demande est autorisée ou non pour chaque adresse d'UE dans la liste d'adresses d'UE.

10. NEF (110) de la revendication 9, dans laquelle la commande (510, 610) est en outre configurée pour :
transmettre, à une fonction de commande de politique, PCF, (120) via l'émetteur-récepteur (520, 620), une deuxième demande comprenant une adresse d'UE incluse dans la liste d'adresses d'UE, de paramètres de QoS de référence ou de QoS individuels et des exigences de service alternatives ; et
recevoir, de la PCF (120) via l'émetteur-récepteur (520, 620), un deuxième message de réponse comprenant un résultat de la deuxième demande.

11. NEF (110) de la revendication 9, dans laquelle la commande (510, 610) est en outre configurée pour :
exécuter une autorisation pour la première demande ;
transmettre, à une fonction de support de liaison, BSF, via l'émetteur-récepteur (520, 620), une demande de découverte de fonction de commande de politique, PCF, associée à une adresse d'UE incluse dans la liste d'adresses d'UE; et
recevoir, depuis la BSF via l'émetteur-récepteur (520, 620), un message de réponse de découverte PCF en réponse à la demande de découverte PCF, et
dans laquelle la commande (510, 610) est en outre configurée pour :
dans le cas où l'autorisation de la première demande n'est pas accordée, transmettre, à l'AF (100) via l'émetteur-récepteur (520, 620), le premier message de réponse comprenant le résultat indiquant que la première demande est rejetée.

12. NEF (110) de la revendication 9, dans laquelle les exigences de service alternatives comprennent une ou plusieurs paramètres de QoS de référence ou de QoS individuels.

13. Fonction d'application, AF,(100) dans un système de communication sans fil, l'AF (100) comprenant :
un émetteur-récepteur (520, 620) ; et
une commande (510, 610) configurée pour :
transmettre, à une fonction d'exposition de réseau, NEF, (110) via l'émetteur-récepteur (520, 620), une première demande comprenant une liste d'adresses d'équipement utilisateur, UE, des paramètres de qualité de service, QoS, de référence ou de QoS individuels pour la liste d'adresses d'UE, et d'exigences de service alternatives ; et
recevoir, depuis la NEF (110) via l'émetteur-récepteur (520, 620), un premier message de réponse comprenant un résultat pour la liste d'adresses d'UE,
dans laquelle le résultat pour la liste d'adresses d'UE comprend des informations indiquant si la première demande est autorisée ou non pour chaque adresse d'UE dans la liste d'adresses d'UE.

14. AF (100) de la revendication 13, dans laquelle les exigences de service alternatives comprennent un ou plusieurs paramètres de QoS de référence ou de QoS individuels.

15. AF (100) de la revendication 13, dans laquelle le premier message de réponse comprend en outre au moins l'un d'un nombre d'UE dans lesquels la QoS est autorisée à partir de la liste d'adresses d'UE, d'un nombre d'UE dans lesquels la QoS est rejetée à partir de la liste d'adresses d'UE, ou d'adresses d'UE dans lesquelles la QoS est autorisée à partir de la liste d'adresses d'UE,
dans laquelle le premier message de réponse comprend en outre un résultat pour la liste d'adresses d'UE associées aux exigences de service alternatives, et
dans laquelle, au cas où l'autorisation pour la première demande n'est pas accordée, le premier message de réponse comprend le résultat indiquant que la première demande est rejetée.
